(19) Europäisches Patentamt
European Patent Office
Office européen des brevets

(11) Numéro de publication : **0 313 488 B1**

(12) # FASCICULE DE BREVET EUROPEEN

(45) Date de publication du fascicule du brevet :
21.08.91 Bulletin 91/34

(51) Int. Cl.$^5$ : **A61H 33/02, F16L 41/08**

(21) Numéro de dépôt : **88440004.5**

(22) Date de dépôt : **12.01.88**

(54) **Dispositif de fixation pour clapet anti-retour de baignoires d'hydromassage.**

(30) Priorité : 23.10.87 FR 8715130

(43) Date de publication de la demande :
26.04.89 Bulletin 89/17

(45) Mention de la délivrance du brevet :
21.08.91 Bulletin 91/34

(84) Etats contractants désignés :
AT BE CH DE ES GB GR IT LI LU NL SE

(56) Documents cités :
DE-B- 1 293 693
GB-A- 2 178 826

(73) Titulaire : NEOMEDIAM, S.A.
Zone Industrielle des Pivoisons
F-10800 Rosières (FR)

(72) Inventeur : Dieudonne, Gérard
46, Avenue Anatole France
F-54000 Nancy (FR)

(74) Mandataire : Nuss, Pierre
10, rue Jacques Kablé
F-67000 Strasbourg (FR)

EP 0 313 488 B1

## Description

La présente invention concerne le domaine des dispositifs d'hydromassage, en particulier des baignoires adaptées à cet effet, et a pour objet un dispositif de fixation pour clapet anti-retour de baignoires d'hydromassage.

L'hydromassage consiste à injecter de l'air dans une baignoire par des orifices percés dans la matière constituant cette dernière. Pour éviter un refoulement de l'eau vers le moteur, il est prévu d'équiper chaque point d'injection d'un clapet anti-retour.

Actuellement, les clapets anti-retour sont fixés sur la baignoire par deux pièces mâle et femelle vissées l'une dans l'autre, une partie de l'assemblage étant apparente dans la baignoire et l'autre étant en saillie sous ladite baignoire ou sur ses parois latérales (GB-A-2.178.826).

Ce mode de montage connu des clapets présente, cependant, un certain nombre d'inconvénients, à savoir d'être inesthétique du fait qu'une partie des clapets est en saillie à l'intérieur des baignoires, généralement sous forme d'un renflement, d'être d'un entretien difficile pour l'utilisateur, et enfin, du fait de l'existence des renflements, d'être d'un contact désagréable et gênant pour l'utilisateur lorsque la baignoire n'est pas utilisée en hydromassage.

La présente invention a pour but de pallier ces inconvénients.

Elle a, en effet, pour objet dispositif de fixation pour clapet anti-retour, ou analogue, en particulier de baignoires d'hydromassage, caractérisé en ce qu'il est essentiellement constitué par un support concentrique à l'axe du perçage des orifices d'injection d'air et muni d'un taraudage coopérant avec un filetage prévu sur le corps du clapet anti-retour, ou analogue, et par une masse de renfort entourant le support et le fixant sur la face externe de la baignoire ou sur un renfort de celle-ci.

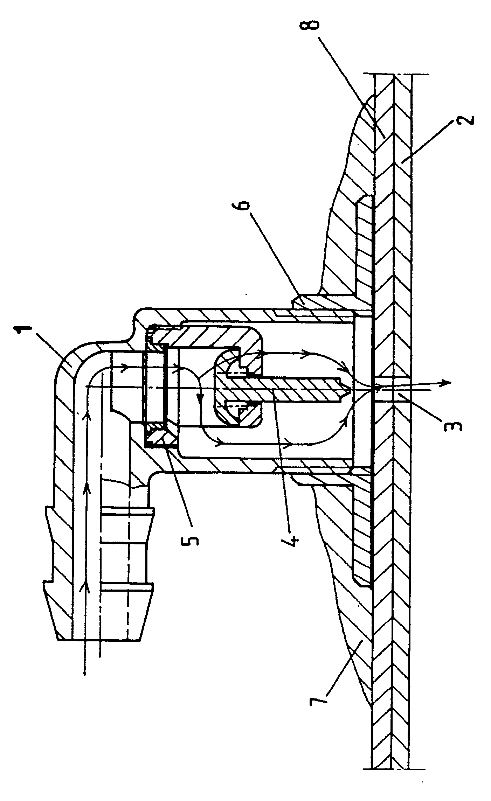

L'invention sera mieux comprise, grâce à la description ci-après, qui se rapporte à un mode de réalisation préféré, donné à titre d'exemple non limitatif, et expliqué avec référence au dessin schématique annexé, dont la figure unique est une vue en coupe du dispositif conforme à l'invention.

Le dessin annexé représente un clapet anti-retour 1 pour baignoire d'hydromassage 2 destiné à injecter de l'air sous pression dans ladite baignoire 2 à travers un orifice d'injection 3 et à éviter tout retour d'eau vers la pompe à air grâce à son élément mobile 4 s'appuyant en position d'obturation sur un siège 5 du clapet 1.

Conformément à l'invention, le clapet 1 est pourvu d'un dispositif de fixation qui est essentiellement constitué par un support 6 concentrique à l'axe du perçage de l'orifice d'injection 3. Ce support 6 est avantageusement pourvu d'un taraudage qui coopère avec un filetage prévu sur le corps du clapet 1. En outre, le support 6 est entouré par une masse 7 de renfort qui réalise simultanément sa fixation, soit directement sur la paroi extérieure de la baignoire 2, soit sur un renfort 8 prévu sur ladite paroi extérieure.

La masse 7 de renfort est avantageusement constituée par une résine fixant le support 6 sur la paroi extérieure de la baignoire 2 ou sur le renfort 8 de cette dernière, par collage.

Grâce au mode de réalisation conforme à l'invention, les clapets anti-retour sont entièrement disposés sur la paroi externe de la baignoire sans qu'aucun élément ne soit en saillie à l'intérieur de la baignoire, de sorte qu'il ne subsiste aucune gêne pour l'utilisateur, l'esthétique des baignoires ainsi équipées est améliorée et leur entretien est plus facile et plus rapide.

En outre, du fait de la prévision d'une liaison vissée entre le support 6 et le corps 1 du clapet anti-retour, ce dernier peut être facilement démonté en vue d'une réparation ou d'un remplacement.

## Revendications

1. Dispositif de fixation pour clapet anti-retour de baignoires d'hydromassage, caractérisé en ce qu'il est constitué par un support (6) concentrique à l'axe du perçage (3) des orifices d'injection d'air et muni d'un taraudage coopérant avec un filetage prévu sur le corps (1) du clapet anti-retour ou analogue et par une masse (7) de renfort entourant le support (6) et le fixant sur la face externe de la baignoire (2) ou sur un renfort (8) de celle-ci.

2. Dispositif, suivant la revendication 1, caractérisé en ce que la masse (7) de renfort est avantageusement constituée par une résine fixant le support (6) sur la paroi extérieure de la baignoire (2) ou sur le renfort (8) de cette dernière, par collage.

## Patentansprüche

1. Befestigungsvorrichtung für ein Rückschlagventil für eine Hydromassage-Wanne, **dadurch gekennzeichnet**, daß sie durch eine zur Achse der Lochung (3) der Lufteintrittsmündungen konzentrische, ein mit einem Gewinde am Ventilkörper (1) oder dergleichen zusammenwirkendes Innengewinde aufweisende Halterung (6) und durch eine die Halterung (6) umschließende, diese an der Außenseite der Wanne (2) oder einer Verstärkung (8) derselben fixierende Verfestigungs- oder Verankerungsmasse (7) gebildet ist.

2. Vorrichtung nach Anspruch 1, dadurch gekennzeichnet, daß die Verankerungsmasse (7) bevorzugt durch ein Harz gebildet ist, welches die Halterung (6) auf der Außenwand der Wanne (2) oder deren Verstärkung (8) durch Klebung fixiert.

**Claims**

1. Fixing device for a non return valve of hydromassage baths, characterised in that it consists of a support (6) which is concentric to the axis of the aperture (3) of the air injection orifices and is equipped with a female thread cooperating with a screw thread provided on the body (1) of the non-return valve or the like and of a reinforcing material (7) surrounding the support (6) and fixing it on the external surface of the bath (2) or on a reinforcement (8) thereof.

2. Device according to claim 1, characterised in that the reinforcing material (7) advantageously consists of a resin fixing the support (6) on the external wall of the bath (2) or on the reinforcement (8) thereof by adhesion.